## Europäisches Patentamt
## European Patent Office
## Office européen des brevets

(19)

(11) Veröffentlichungsnummer: **0 153 592 B1**

(12) **EUROPÄISCHE PATENTSCHRIFT**

(45) Veröffentlichungstag der Patentschrift: **21.08.91**

(51) Int. Cl.⁵: **B29C 45/28**

(21) Anmeldenummer: **85100808.6**

(22) Anmeldetag: **26.01.85**

(54) **Zwangsgesteuerter Nadelverschluss für Spritzdüsen in Spritzgiessformen.**

(30) Priorität: **02.02.84 DE 3403603**

(43) Veröffentlichungstag der Anmeldung:
**04.09.85 Patentblatt 85/36**

(45) Bekanntmachung des Hinweises auf die
Patenterteilung:
**21.08.91 Patentblatt 91/34**

(84) Benannte Vertragsstaaten:
**AT BE CH DE FR GB IT LI NL SE**

(56) Entgegenhaltungen:
**EP-A- 0 021 273**
**EP-A- 0 076 980**
**EP-A- 0 120 412**
**GB-A- 2 097 714**
**US-A- 4 268 240**

(73) Patentinhaber: **Fried. Krupp Gesellschaft mit
beschränkter Haftung
Altendorfer Strasse 103
W-4300 Essen 1(DE)**

(72) Erfinder: **Blank, Michael
Am Hochsitz 27
W-5600 Wuppertal 1(DE)**

## Beschreibung

Die Erfindung betrifft einen zwangsgesteuerten Nadelverschluß für eine durch eine Verschlußnadel verschließbare Spritzdüse in einer Spritzgießform, bei der die Verschlußnadel mit ihrem von der Spritzdüse abgewandten Antriebsende in eine axiale Kolbenbohrung in einem beidseitig mit Kolbenstangenansätzen versehenen Antriebskolben eines beidseitig mit einem Druckmedium beaufschlagbaren Antriebszylinders eingreift und in diesem befestigt ist, bei der die Spritzdüse in einer maschinenfesten Zwischenplatte der Spritzgießform anzuordnen und mit einem beheizten Heißkanalverteiler zu verbinden ist, durch den die Verschlußnadel hindurchgeführt ist, und bei welcher der Antriebszylinder in einer maschinenfesten Endplatte zu befestigen ist, die an der von der Spritzdüse abgewandten Seite der Zwischenplatte fest anliegt.

Bei einem bekannten Nadelverschluß der genannten Art (DE-A 1-31 40 711) ist der Kolben mit einer durchgehenden Bohrung versehen, die vom von außen zugängigem Ende des äußeren Kolbenstangenansatzes ausgehend mit einem Innengewindeabschnitt versehen ist. Die Verschlußnadel selbst ist an ihrem Antriebsende mit einem Außengewinde versehen und mit diesem von außen in den Kolben einschraubbar. Über das Gewinde, mit dessen Hilfe eine axiale Verstellung der Verschlußnadel im Kolben möglich ist, werden die Öffnungs- und Schließkraft übertragen. Die Arretierung der Verschlußnadel erfolgt über eine Kontermutter, die stirnseitig gegen den äußeren Kolbenstangenansatz anliegt.

Weiterhin ist ein Nadelverschluß bekannt (DE-A 1-29 19 862), bei dem der Kolben des Hydraulikzylinders einseitig mit einem Kolbenstangenansatz versehen ist. Die Verschlußnadel ist dabei an ihrem Antriebsende mit einem zylindrischen Kopf versehen, der in einer vom Antriebsende des Kolbens ausgehenden Senkbohrung liegt und in dieser durch einen Gewindestopfen gehaltert ist. Durch diesen und durch die ringförmige Schulter am Boden der Senkung werden die Öffnungs- und Schließkraft auf die Verschlußnadel übertragen.

Beim Gegenstand der EP-A 1-00 21 273 ist der Kolben, in dem die Verschlußnadel unmittelbar angebracht sein kann und der dann doppeltwirkend ist, in der Heißkanalverteilerplatte geführt. Die Verschlußnadel stützt sich bei dieser Ausführungsform über zumindest eine Befestigungsmutter in einer Gewindebohrung des Antriebszylinders ab. Die Heißkanalverteilerplatte kann ohne Abreißen der zugehörigen Verschlußnadeln erst nach Öffnen der Antriebszylinder und Lösen der Befestigungsmuttern ausgebaut werden; Entsprechendes gilt für das Auswechseln einzelner Verschlußnadeln.

Bei Mehrfach-Spritzgießformen, deren Einzelformen jeweils einen Nadelverschluß aufweisen, insbesondere sogenannten Preform-Spritzgießformen, sind die Spritzdüsen jeweils mit gesonderten elektrischen Heizelementen versehen. Weitere Heizelemente sind in der Verteilerplatte angeordnet.

Die Heizelemente stellen periodischen Inspektionen unterliegende Verschleißelemente dar. Zur Durchführung dieser Inspektionen muß der Heißkanalbereich freigelegt werden, in dem die Endplatte, in bzw. an der die einzelnen Antriebszylinder befestigt sind, von der Spritzgießform gelöst werden muß. Die Endplatte kann bei den bekannten Nadelverschlüssen mit einseitigem Kolbenstangenansatz nur gemeinsam mit den Verschlußnadeln demontiert werden, wenn nicht vorher die Antriebszylinder einzeln demontiert und die Verschlußnadeln mit den Kolben entnommen werden. Bei Ausführungsformen mit beidseitigen Kolbenstangenansätzen können die Verschlußnadeln zwar ohne Öffnen des Hydraulikkreises nach außen herausgenommen werden; hierzu wird jedoch ein Raum benötigt, der mindestens der Länge der Verschlußnadeln entspricht. In beiden Fällen muß für eine Demontage der Heißkanal aufgeheizt werden. Beim Abnehmen der Endplatte mit den Verschlußnadeln muß diese zu den anderen Platten der Form genau geführt sein. Eine Montage mit an den Antriebszylindern befestigten Verschlußnadeln ist in der Praxis nicht möglich.

Weit schwieriger gestaltet sich noch die Demontage bei Versagen von Heizelementen in Bereichen des Heißkanals, die zu einem Einfrieren der Verschlußnadeln führt. In diesem Fall ist eine Demontage der Endplatte mit dem Antriebszylinder im allgemeinen nur durch Abreißen der Verschlußnadeln möglich. Aus den genannten Gründen wird zur Durchführung von Reparaturen und auch Inspektionen die Spritzgießform regelmäßig von der Spritzgießmaschine abgenommen.

Aufgabe der Erfindung ist es, einen Nadelverschluß der genannten Art so auszubilden, daß eine einfache Demontage und Remontage von maschinenseitigen Formteilen der Spritzgießform zur Durchführung von Inspektionsarbeiten bzw. zur Beseitigung von Fehlern aller Art ohne Aufheizen der Spritzgießform und ohne deren Ausbau aus der Spritzgießmaschine möglich ist.

Diese Aufgabe wird durch einen zwangsgesteuerten Nadelverschluß gelöst, welcher die Merkmale des Patentanspruchs 1 aufweist.

Zweckmäßige Ausgestaltungen des Gegenstands des Patentanspruchs 1 werden mit den Unteransprüchen beschrieben.

Ein besonderer Vorteil des erfindungsgemäßen Nadelverschlusses ist auch darin zu sehen, daß bei der Demontage und Remontage die normalerweise als Hydraulikzylinder ausgebildeten Antriebszylinder selbst nicht geöffnet zu werden brauchen und damit Ölverschmutzungen vermieden werden.

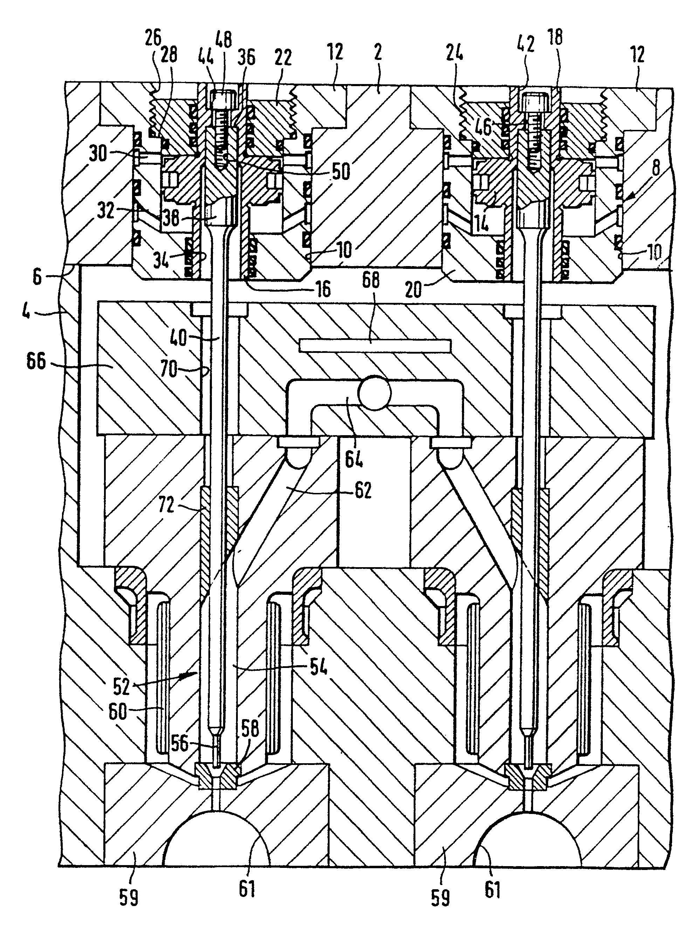

Die Erfindung wird nachfolgend anhand der Zeichnung im einzelnen erläutert, die einen Längsschnitt durch einen der beiden Teile einer Mehrfach-Spritzgießform im Bereich zweier benachbarter Spritzdüsen zeigt.

In der Zeichnung sind zwei aneinander lösbar befestigte Platten 2, 4 einer Mehrfach-Spritzgießform dargestellt, die in der Ebene 6 aneinander anliegen und in dieser Ebene voneinander trennbar sind. Die beiden Platten 2 und 4 gehören normalerweise zum maschinenfesten Teil der Spritzgießform. Die Platte 2 kann dabei gleichzeitig Befestigungsplatte sein.

In der Platte 2 sind Hydraulikzylinder 8 angeordnet, die in Bohrungen 10 eingesetzt sind. Die Befestigung erfolgt jeweils mit Hilfe eines in die Platte 2 eingelassenen Befestigungsflansches 12. Der Hydraulikzylinder 8 ist mit einem beidseitig beaufschlagbaren Kolben 14 versehen, der beidseitig mit einem Kolbenstangenansatz 16 bzw. 18 versehen ist. Der Zylinder 8 ist auf der Innenseite einstückig mit einem Zylinderdeckel 20 versehen. Auf der Außenseite ist ein Zylinderdeckel 22 vorgesehen, der außen mit einem Gewinde 24 versehen ist, mit dem er in eine Gewindebohrung 26 gegen einen Anschlag 28 verschaubbar ist.

In den Zylinderdeckeln 20 und 22 sind in üblicher Weise Kolbenstangendichtungen angeordnet. Der Hydraulikzylinder ist mit Anschlüssen 30, 32 versehen, die zu Ringkanälen am Umfang des Zylinders führen, die in bekannter Weise mit Kanälen in der Platte 2 verbunden sind, die in der Zeichnung nicht dargestellt sind. Die Ringkanäle sind gegeneinander in der Bohrung 10 über O-Ringe abgedichtet.

Im Kolben 14 ist eine vom Ende des inneren Kolbenstangenansatzes 16 ausgehende Bohrung 34 vorgesehen, die vor einer Ringschulter 36 endet, die hier im Bereich des äußeren Kolbenstangenansatzes 18 liegt. In diese Bohrung greift das Befestigungsende 38 einer Verschlußnadel 40 ein. Im Bereich der Schulter 36 ist die Bohrung 34 so ausgebildet, daß das Befestigungsende 38 der Verschlußnadel radial geführt ist. Im übrigen Abschnitt der Bohrung 34 ist die Verschlußnadel 40 radial ungeführt.

Vom von außen frei zugänglichen Ende des äußeren Kolbenstangenansatzes 18 ausgehend ist eine Senkbohrung 42 vorgesehen, deren Boden gleichfalls eine ringförmige Schulter 44 bildet. Im Bereich zwischen den Schultern 36 und 44 ist eine Bohrung 46 vorgesehen, durch die eine vorzugsweise als Imbusschraube ausgebildete Schraube 48 in eine axiale Gewindebohrung 50 im Befestigungsende 38 der Verschlußnadel einschraubbar ist. Über die Schraube wird die Verschlußnadel mit der Stirnseite des Befestigungsendes 38 gegen die Schulter 36 gezogen, so daß vom Kolben 14 die nach unten gerichteten Schließkräfte auf die Verschlußnadel übertragen werden, während über die mit ihrem Kopf auf der Schulter 44 aufliegende Schraube 48 die Öffnungskräfte auf die Verschlußnadel übertragen werden.

In der Platte 4 sind in entsprechenden Bohrungen in bekannter Weise die Spritzdüsen 52 untergebracht. Diese weisen einen Heißkanal 54 auf, durch den mittig die Verschlußnadel 40 hindurchgeführt ist, die mit ihrem Verschlußteil 56 in einen Angußring 58 eingreift. Von der gegenüberliegenden Seite der Platte 4 sind in diese Formelemente 59 eingelassen, die auf der Außenseite mit einer Formmulde 61 in Form einer Kugelkalotte versehen ist, wie sie bei der Herstellung von sogenannten Preforms verwendet wird.

Der Heißkanal 54 wird über ein elektrisches Heizelement 60 beheizt, das diesen Bereich außen umschließt. Der Heißkanal 54 steht mit einem schräg an diesen herangeführten Zufuhrkanal 62 in Verbindung, der seinerseits wiederum in Verbindung steht mit einem Massekanal 64 in einer Verteilerplatte 66. In dieser sind weitere Heizelemente 68 vorgesehen, von denen eines schematisch wiedergegeben sind.

Die Verschlußnadeln 40 sind durch Bohrungen 70 mit einem Durchmesser größer als der des Befestigungsendes 38 durch die Platte 66 hindurchgeführt. Ihre Führung erfolgt in Führungsbuchsen 72 in den Spritzdüsen 52.

Weitere Einzelheiten der Spritzgießform brauchen für die Erläuterung der Erfindung nicht beschrieben zu werden. Sie können beispielsweise in der Weise ausgebildet sein wie in der DE-A1-31 40 711 beschrieben.

Zur Montage der Spritzgießform werden die Spritzdüsen 52 in die Platte 4 der Form eingesetzt und darauf wird die Verteilerplatte 66 montiert. Es können dann die Verschlußnadeln 40 eingesetzt werden. Anschließend wird die Platte 2 montiert, wobei auch bei einer Mehrfachform, beispielsweise einer Spritzgießform mit 16 Einzelformen, wie es für eine Preform-Spritzgießform typisch ist, die Platte 2 ohne Schwierigkeiten montierbar ist. Die Verschlußnadeln gleiten dabei in den Kolben 14 über den weiter. Bereich der Bohrung 34 in den Bereich dieser Bohrung, in dem sie radial geführt sind. Nach Befestigung der Platte 2 auf der Platte 4 werden dann die Schrauben 48 eingesetzt und angezogen. Für die Montage können die Verschlußnadeln aber selbstverständlich auch vorher mit den Kolben verbunden sein.

Zur Durchführung von Wartungs- und Reparaturarbeiten einer in der Spritzgießmaschine montierten Spritzgießform wird der maschinenbewegliche Teil der Spritzgießform, der in der Zeichnung nicht dargestellt ist, bei geschlossener Spritzgießform mit dem maschinenfesten Teil der Spritzgießform verriegelt und die Platte 2 von der Aufspannung an der Spitzgießmaschine gelöst. Die Spritzgießmaschine wird dann offen gefahren. Dabei wird die Platte 2 von deren Befestigungsseite her zugängig. Zum Abnehmen der Platte 2 werden die Schrauben 48 zu den einzelnen Verschlußnadeln 40 und anschließend die Befestigungen zwischen den Platten 2 und 4 gelöst. Darauf kann die Platte 2 abgenommen werden, wobei die Verschlußnadeln stehenbleiben. Diese Arbeiten werden bei ausgeschalteter Heizung durchgeführt. Die Verschlußnadeln sitzen daher in dem Kunststoff fest, der in dem Heißkanal 54 erstarrt ist.

Nach Abnehmen der Platte ist die Verteilerplatte 66 frei zugängig und auch ohne Schwierigkeiten abnehmbar. Nach Abnahme der Verteilerplatte liegen dann die einzelnen Spritzdüsen 52 mit den Verschlußnadeln 40 frei und können aus der Platte 4 herausgenommen, inspiziert und notfalls repariert oder ersetzt werden.

Bei der Montage und bei der Remontage wird in Achsrichtung der Verschlußnadeln für die Abnahme der Platte 2 und der Verteilerplatte 66 lediglich ein Raum benötigt, der der Eintauchtiefe des Befestigungsendes der Verschlußnadeln im Kolben 14 entspricht. Es braucht also nicht wie bei den bekannten Ausführungen ein Raum entsprechend dem Abstand zwischen der Befestigungsseite der Platte 2 und dem Verschlußende 56 der Verschlußnadeln 40 zur Verfügung gestellt zu werden.

Damit verbleibt zwischen der maschinenfesten Aufspannplatte der Spritzgießmaschine und dem Werkzeug bei der beschriebenen Demontage und Remontage ein ausreichender Raum, in dem sich der Monteur bewegen kann. Wesentlich ist weiter, daß alle Arbeiten bei unbeheizter Spritzgießform durchgeführt werden können. Mit der beschriebenen Anordnung des Nadelverschlusses lassen sich in einfacher Weise Wartungs- und Reparaturarbeiten im Bereich der Verteilerplatte und der Spritzdüsen einschließlich deren Verschlußnadeln an der in der Spritzgießmaschine montierten Spritzgießform durchführen. Dies trägt zusätzlich dazu bei, daß extrem kurze Betriebsunterbrechungen für eine Wartung bzw. Reparatur erreichbar sind.

**Patentansprüche**

1. Zwangsgesteuerter Nadelverschluß für eine durch eine Verschlußnadel (40) verschließbare Spritzdüse (52) in einer Spritzgießform, bei der die Verschlußnadel (40) mit ihrem von der Spritzdüse (52) abgewandten Antriebsende in eine axiale Kolbenbohrung (34, 42, 46) in einem beidseitig mit Kolbenstangenansätzen (16, 18) versehenen Antriebskolben (14) eines beidseitig mit einem Druckmedium beaufschlagbaren Antriebszylinders (8) eingreift und in diesem befestigt ist, bei der die Spritzdüse (52) in einer maschinenfesten Zwischenplatte (4) der Spritzgießform anzuordnen und mit einem beheizten Heißkanalverteiler (66) zu verbinden ist, durch den die Verschlußnadel (40) hindurchgeführt ist, und bei welcher der Antriebszylinder (8) in einer maschinenfesten Endplatte (2) zu befestigen ist, die an der von der Spritzdüse (52) abgewandten Seite der Zwischenplatte (4) fest anliegt, **dadurch gekennzeichnet,** daß in der Kolbenbohrung (34, 42, 46) ein in Schließrichtung der Verschlußnadel (40) wirksamer Anschlag (36) für das Antriebsende der Verschlußnadel (40) ausgebildet ist und daß vom Ende des von der Verschlußnadel (40) abgewandten Kolbenstangenansatzes (18) eine Schraube (48) in eine Gewindebohrung (50) in das Antriebsende der Verschlußnadel einschraubbar ist, die gegen einen in Öffnungsrichtung wirksamen Anschlag (44) im von der Verschlußnadel (40) abgewandten Kolbenstangenansatz (18) anliegt.

2. Vorrichtung nach Anspruch 1, dadurch gekennzeichnet, daß in der axialen Kolbenbohrung (34, 42, 46) gegenüberliegend zwei Anschlagschultern (36, 44) ausgebildet sind.

3. Vorrichtung nach Anspruch 1, dadurch gekennzeichnet, daß vom Ende des von der Verschlußnadel (40) abgewandten Kolbenstangenansatzes (18) ausgehend eine Senkbohrung (42) ausgebildet ist, deren Boden den in Öffnungsrichtung der Verschlußnadel (40) wirksamen Anschlag (44) bildet.

**Claims**

1. A constrainedly controlled needle closure for an injection nozzle (52) which can be closed by a closure needle (40) in an injection mould, wherein the closure needle (40) engages via its driving end remote from the injection nozzle (52) in an axial piston bore (34, 42, 46) in a driving piston (14), having piston rod attachments (16, 18) on both sides, of a driving cylinder (8) acted upon by a pressure medium on both sides and is attached therein; the injection nozzle (52) is disposed in an intermediate plate (4), rigidly connected to the machine, of the injection mould and is connected to a heated hot channel distributor (66) through which the closure needle (40) extends; and the driving cylinder (8) is attached to an end plate (2) which is rigidly attached to the machine and bears firmly against the side of the intermediate plate (4) remote from the injection nozzle (52), characterized in that a stop (36) operative in the closing direction of the closure needle (40) is constructed in the piston bore (34, 42, 46) for the driving end of the closure needle (40), and a screw (48) can be screwed from the end of the piston rod attachment (18) remote from the end of the closure needle (40) into a threaded bore (50) in the driving end of the closure needle, said screw bearing against a stop (44) operative in the opening direction in the piston rod attachment (18) remote from the closure needle (40).

2. A device according to claim 1, characterized in that two stop shoulders (36, 44) are constructed opposite one another in the axial piston bore (34, 42, 46).

3. A device according to claim 1, characterized in that starting from the end of the piston rod attachment (18) remote from the closure needle (40) a countersunk bore (42) is provided whose bottom forms the stop (44) operative in the opening direction of the closure needle (40).

**Revendications**

1. Fermeture à aiguille à action commandée pour une buse d'injection (52) de moule d'injection, verrouillable au moyen d'une aiguille de fermeture (40), dans lequel :
   - l'aiguille de fermeture (40), avec son extrémité d'entraînement opposée à la buse d'injection (52) pénètre dans un alésage de piston (34, 42, 46) axial, à l'intérieur d'un piston d'entraînement (14), daté des deux côtés d'embases de bielles (16, 18)) ; le piston d'entraînement est placé dans un cylindre d'entraînement (8) pouvant être alimenté des deux côtés par un fluide de mise sous pression ; et l'aiguille de fermeture est solidaire du piston d'entraînement ;
   - la buse d'injection (52) est aménagée dans une plaque intermédiaire (4) du moule d'injection solidaire de la machine, et est reliée avec un collecteur de canaux thermiques (66) chauffé, traversé de part en part par l'aiguille de fermeture (40), et
   - le cylindre d'entraînement (8) est relié au niveau d'une plaque terminale (2), solidaire de la machine, qui est placée de façon fixe sur le côté de la plaque intermédiaire (4) opposé à la buse d'injection (52), caractérisé en ce que, l'on prévoit, dans l'alésage de piston (34, 42, 46) une butée (36) agissant dans la direction de fermeture de l'aiguille de fermeture (40) pour l'extrémité d'entraînement de l'aiguille de fermeture (40)et, en ce que, à partir de l'extrémité de l'embase de bielle (18) opposée à l'aiguille de fermeture (40), une vis (48) peut se visser à l'intérieur d'un taraudage fileté (50), réalisé dans l'extrémité de l'entraînement de l'aiguille de fermeture ; cette vis reposant face à une butée (44) agissant dans la direction d'ouverture placée dans l'embase de bielle (18) opposée à l'aiguille de fermeture (40).

2. Dispositif selon la revendication 1 caractérisé en ce que dans l'alésage axial de piston (34, 42, 46), on a prévu deux embases de butée (36, 44) se faisant face.

3. Dispositif selon la revendication 1 caractérisé en ce que à partir de l'extrémité de l'embase de bielle (18), opposée à l'aiguille de fermeture (40), on a prévu, à partir de là, un perçage vertical (42) dont la base forme la butée (44) agissant dans la direction d'ouverture de l'aiguille de fermeture (40).

EP 0 153 592 B1